# EUROPEAN PATENT APPLICATION

(11) **EP 4 818 889 A1**
(43) Date of publication of application: **07.10.2026**
(21) Application number: 26167450.1
(22) Date of filing: 25.03.2026
(51) Int. Cl.: G06F 8/65, G06F 9/451, G06F 21/10

(54) **PROCESSING APPARATUS, METHOD FOR CONTROLLING PROCESSING APPARATUS, AND NON-TRANSITORY COMPUTER-READABLE MEDIUM**

(30) Priority: 04.04.2025 JP 2025062275
(71) Applicant: Sharp Kabushiki Kaisha, Sakai City, Osaka 590-8522 (JP)
(72) Inventor: OGINO, Kumiko, Osaka, 590-8522 (JP)
(74) Representative: Müller Hoffmann & Partner

(57) **Abstract**

A processing apparatus of the present disclosure includes a memory and one or more controllers, the one or more controllers providing an update function for updating a computer program stored in the memory, and controlling display of a document related to the computer program, based on whether the update function is enabled.

## Description

### BACKGROUND OF THE INVENTION

### Field of the Invention

The present disclosure relates to a processing apparatus and the like.

### Description of the Background Art

Some processing apparatuses include an update function for updating a computer program executed in the processing apparatus and display a document related to the update of the computer program. Japanese Patent Application Laid-Open No. 2012-248018 discloses a technique related to the present disclosure.

A problem to be solved by the present disclosure is to appropriately display a document related to an update of a computer program.

### SUMMARY OF THE INVENTION

The present disclosure provides a processing apparatus including a memory and one or more controllers, wherein the one or more controllers provide an update function for updating a computer program stored in the memory and control display of a document related to the computer program, based on whether the update function is enabled.

Further, the present disclosure provides a method for controlling a processing apparatus including a memory, the method including an update function of updating a computer program stored in the memory by an update function, and controlling display of a document related to the computer program, based on whether the update function is enabled.

Further, the present disclosure provides a non-transitory computer-readable medium causing a computer to implement: an update function of updating a computer program stored in a memory; and a function of controlling display of a document related to the computer program, based on whether the update function is enabled.

According to the present disclosure, it is possible to appropriately display a document related to an update of a computer program.

### BRIEF DESCRIPTION OF DRAWINGS

FIG. 1 is a conceptual diagram of a system according to the present disclosure.
FIG. 2 is a block diagram of an image forming apparatus according to the present disclosure.
FIG. 3 is a block diagram of a controller of the image forming apparatus according to the present disclosure.
FIG. 4 is a block diagram of a memory of the image forming apparatus according to the present disclosure.
FIG. 5 is a diagram illustrating an example of a screen displayed on a displayer of an image forming apparatus in a general firmware update processing operation mode setting.
FIG. 6 is a diagram illustrating an example of a screen displayed on a displayer of an image forming apparatus in a general firmware update processing operation mode setting.
FIG. 7 is a diagram illustrating an example of a screen displayed on a displayer of an image forming apparatus in a general firmware update processing operation mode setting or the operation mode setting according to the present disclosure.
FIG. 8 is a flowchart for explaining a firmware update processing operation mode setting of the image forming apparatus according to the present disclosure.
FIG. 9 is a diagram illustrating an example of a screen displayed on a displayer of the image forming apparatus according to the present disclosure in Operation Example 1.
FIG. 10 is a diagram illustrating an example of a screen displayed on a displayer of the image forming apparatus according to the present disclosure in Operation Example 1.
FIG. 11 is a diagram illustrating an example of a screen displayed on a displayer of the image forming apparatus according to the present disclosure in Operation Example 1.
FIG. 12 is a diagram illustrating an example of a screen displayed on a displayer of the image forming apparatus according to the present disclosure in Operation Example 1.
FIG. 13 is a diagram illustrating an example of a screen displayed on a displayer of the image forming apparatus according to the present disclosure in Operation Example 2.
FIG. 14 is a diagram illustrating an example of a screen displayed on a displayer of the image forming apparatus according to the present disclosure in Operation Example 2.
FIG. 15 is a diagram illustrating an example of a screen displayed on a displayer of the image forming apparatus according to the present disclosure in Operation Example 3.
FIG. 16 is a diagram illustrating an example of a screen displayed on a displayer of the image forming apparatus according to the present disclosure in Operation Example 4.
FIG. 17 is a diagram illustrating an example of a screen displayed on a displayer of the image forming apparatus according to the present disclosure in Operation Example 4.
FIG. 18 is a diagram illustrating an example of a screen displayed on a displayer of the image forming apparatus according to the present disclosure in Operation Example 5.
FIG. 19 is a diagram illustrating an example of a screen displayed on a displayer of the image forming apparatus according to the present disclosure in Operation Example 5.

### DESCRIPTION OF THE PREFERRED EMBODIMENTS

The present disclosure provides a user interface (UI) that is easy for a user to understand by controlling a method of displaying a screen related to a document, based on a usage status of a computer program update function. Here, although various things can be considered as the computer program to be updated, a case where firmware is taken as an example will be described below.

Some processing apparatuses, such as an image forming apparatus, have a function of updating firmware of a main body via a network. Here, the image forming apparatus may be, for example, an apparatus that forms an image such as a printer, a scanner, or a facsimile, or may be an apparatus called a multi-function peripheral having a plurality of these functions.

In a general image forming apparatus, regarding the operation of a firmware update function (hereinafter, simply referred to as an update function), an administrator (hereinafter, also referred to as a user) has set an update method in system settings. A method by which the update function updates firmware is also called an operation mode.

The operation mode includes, for example, a disabled mode, an automatic mode, and an administrator confirmation mode, and normally, the update function updates firmware according to an operation mode set in advance by the administrator. When the operation mode is disabled, the update function is disabled. In this case, in order to update the firmware, the administrator or the like needs to access a distribution server that distributes the firmware, download new firmware, and personally perform an operation for applying the firmware to the image forming apparatus. In the automatic mode, for example, the image forming apparatus automatically accesses the distribution server according to a preset timing and frequency, and when there is a firmware update, downloads and applies new firmware. In the administrator confirmation mode, the image forming apparatus automatically accesses the distribution server according to a preset timing and frequency, and when there is a firmware update, downloads new firmware, but application of the firmware requires permission from the administrator, and the firmware update is executed according to an update execution instruction operation manually performed by the administrator or the like.

In a general image forming apparatus, terms of use are available for confirmation at any time regardless of an operation mode setting state. For this reason, the terms of use may be displayed even in a situation where confirmation is originally unnecessary. Further, when the operation mode is changed, there are cases where confirmation of the terms of use is necessary and cases where such confirmation is unnecessary; however, in a general image forming apparatus, the terms of use may be displayed in either case.

In contrast, in the image forming apparatus according to the present disclosure, the display state of the terms of use and consent confirmation is appropriately switched based on the changed content of the firmware update method (disabled/automatic mode/administrator confirmation mode).

The following embodiments are described as an example of the disclosure described in the claims, and the technical scope of the present disclosure is not limited to the description of the following embodiments. Further, in the following embodiments, a case where the processing apparatus of the present disclosure is applied to an image forming apparatus will be described, but the processing apparatus is not limited to the image forming apparatus. For example, the present disclosure is also applicable to various information processing apparatuses that display a document upon updating a computer program such as an installed OS, a driver program, or an application program, specifically, a processing apparatus such as a desktop computer, a laptop computer, a server, a workstation, a tablet, or a smartphone.

### 1. Overall Configuration

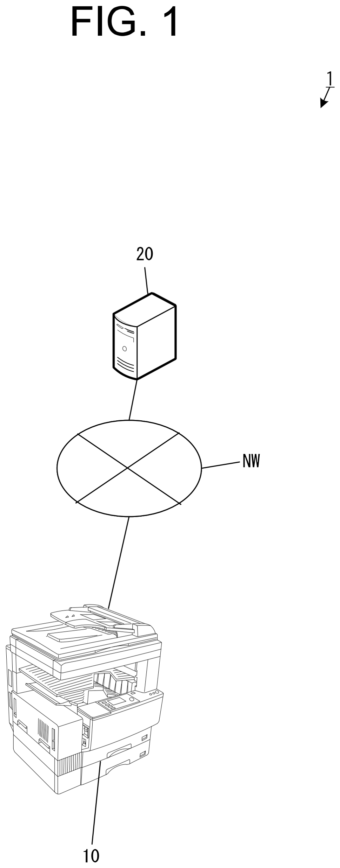

FIG. 1 is a conceptual diagram of a system 1 according to the present disclosure. The system 1 includes an image forming apparatus 10 and a server 20, which are connected via a network NW. The image forming apparatus 10 is a Multi-Function Peripheral/Printer (MFP) and is also called a multi-function peripheral. For example, when the image forming apparatus 10 executes a job (print job), it can form an image on paper, which is a recording medium. The image forming apparatus 10 can execute jobs for a plurality of processes such as copy processing, fax processing, scan processing, and print processing as jobs to be executed.

The server 20 is an apparatus to which the image forming apparatus 10 can be connected. For the server 20, in addition to hardware, services provided on a cloud (Software as a Service (SaaS), Platform as a Service (PaaS), Infrastructure as a Service (IaaS), etc.) may be used.

The server 20 is a server that distributes the latest firmware. The network NW is a data communication network, and may be a wired network or a wireless network, or a wired network and a wireless network may coexist. For example, it is a Local Area Network (LAN), a Wide Area Network (WAN), or the Internet. The network NW may be a network composed of a plurality of networks. The network NW may include a mobile communication network.

Here, the system 1 may include one or a plurality of image forming apparatuses 10 and one or a plurality of servers 20, and the functions described in the present disclosure for the server 20 may be executed by being distributed to a plurality of servers.

### 2. Hardware Configuration

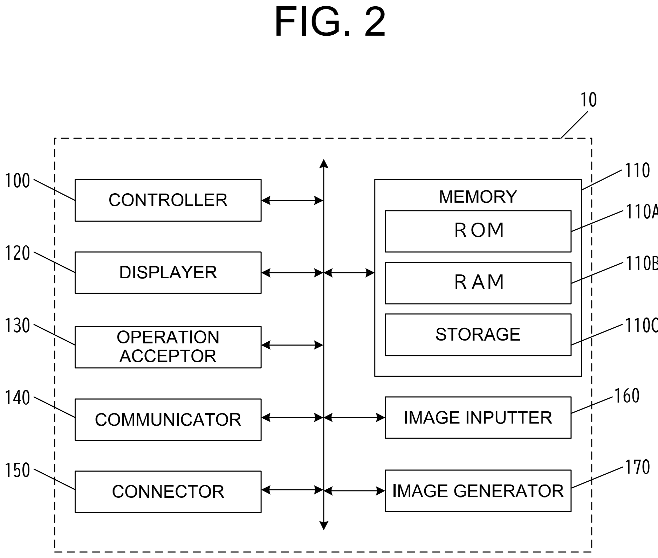

FIG. 2 is a diagram illustrating an example of a functional configuration of the image forming apparatus 10. The image forming apparatus 10 is an image processing apparatus or an information processing apparatus also called a multi-function peripheral, and typically includes a copy function, an image scanner function, a facsimile function, and a printer function. The image forming apparatus 10 may further include other functions, and may include, for example, an e-mail transmission/reception function, a file server function, and the like.

The controller 100 controls the entire image forming apparatus 10. The controller 100 implements various functions by reading and executing various computer programs stored in the memory 110 (for example, a ROM 110A or a storage 110C). The controller 100 may be implemented by one or a plurality of control devices/arithmetic devices (Central Processing Unit (CPU), System on a Chip (SoC)). Further, the controller 100 may be configured by one or a plurality of control circuits.

Further, the controller 100 may control components of the image forming apparatus 10 described below according to firmware stored in a firmware storage area 110-1, which will be described below.

The memory 110 stores various computer programs and various data necessary for the operation of the image forming apparatus 10. The memory 110 may be configured by a Read Only Memory (ROM) 110A, a Random Access Memory (RAM) 110B, a storage 110C, and the like. The ROM 110A is a non-volatile memory that can retain computer programs and data even if power is turned off, and may store, for example, a Basic Input/Output (BIOS) or firmware. Further, the ROM 110A is used as a main storage device of the controller 100. The RAM 110B may be a storage device capable of temporarily storing data, such as a Dynamic Random Access Memory (DRAM).

The storage 110C is a non-volatile storage device capable of storing computer programs and data. For example, the storage 110C may be a non-transitory storage device such as a Solid State Drive (SSD) composed of a semiconductor memory or a Hard Disk Drive (HDD) composed of a magnetic disk. The memory 110 may include one or a plurality of each of the ROM 110A, the RAM 110B, and the storage 110C. Further, although the memory 110 is shown as one configuration for convenience of explanation, it may be configured as separate devices for each application, such as an area used for execution of computer programs (main storage area), an area for saving computer programs and data (auxiliary storage area), an area used for cache, and the like.

The displayer 120 is a display device capable of displaying various types of information and execution screens. The displayer 120 is configured by, for example, a liquid crystal display (LCD), an organic electro-luminescence (EL) panel, or the like. The displayer 120 may be a standalone display device, or may further include an externally connected display device.

The operation acceptor 130 is an operation device that receives operation inputs from a user. For example, the operation acceptor 130 may implement hardware keys. Further, the operation acceptor 130 may include operation keys such as a task key for instructing execution of a task such as fax transmission or image reading, and a cancel key for instructing cancellation of an operation.

Further, the operation acceptor 130 can be configured using a touch panel that allows input via the displayer 120. When the operation acceptor 130 is configured as a touch panel, it may implement software keys via the displayer 120. Further, the operation acceptor 130 may detect a user's touch, tap, swipe operation, or the like on a displayed object, and acquire coordinate positions, pressure sensitive information, or the like of touch panel information. In this case, as an input method of the touch panel, for example, general input methods such as a resistive film method, an infrared method, an electromagnetic induction method, and a capacitive method can be adopted.

The communicator 140 is a communication device that connects to a network. The communicator 140 is configured by, for example, an interface connectable to a wired Local Area Network (LAN), a wireless LAN, or a Long Term Evolution (LTE) network. By the communicator 140 being connected to the network, it is connected to other devices and an external network. Further, in addition to this, the communicator 140 may be an interface for performing short-range wireless communication such as Near Field Communication (NFC) or Bluetooth (registered trademark).

The connector 150 is an interface that connects the image forming apparatus 10 and other equipment. For example, the connector 150 is a USB interface, to which a USB memory or the like is connected. Further, the connector 150 may be an interface such as HDMI (registered trademark) other than the USB interface.

The image inputter 160 reads an image (document) and outputs it as image data. The image inputter 160 may be configured by a general scanner (image input device). Further, the image inputter 160 may input image data from an external storage medium such as a USB memory, or may receive an image via a network.

The image generator 170 forms (prints) an image on a medium such as recording paper, based on image data. The image generator 170 includes, for example, an image bearing member, forms a toner image on the image bearing member, and forms an image by transferring the toner image on the image bearing member onto recording paper. The image generator 170 may be configured as an image forming apparatus such as a printer. Further, the image generator 170 may electronically form an image as an image file. Further, a printing method of the image generator 170 is arbitrary, and for example, any of an inkjet method, a thermal transfer method, and the like may be used other than the laser method. Further, the image generator 170 may be a monochrome printer or a color printer.

### 3. Software Configuration

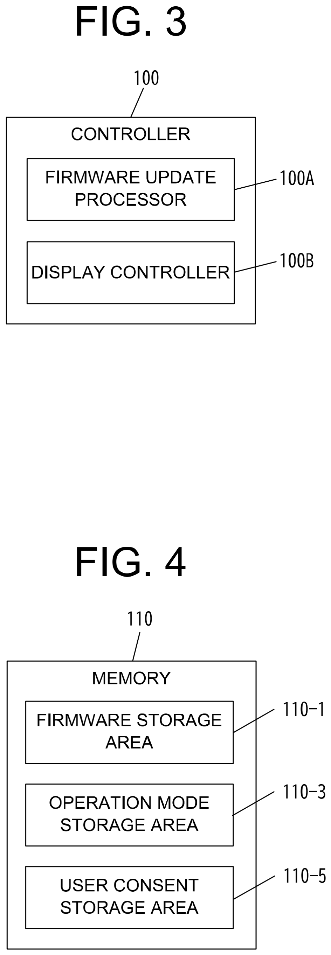

FIG. 3 is a block diagram of the controller 100 of the image forming apparatus 10 according to the present disclosure. The controller 100 includes a firmware update processor 100A and a display controller 100B.

The firmware update processor 100A executes firmware update processing. For example, when the server 20 starts distributing new firmware, the firmware update processor 100A may acquire the firmware via the network NW using the communicator 140. Further, the firmware update processor 100A may acquire firmware via an external storage device such as a USB memory. The firmware update processor 100A executes firmware update processing according to an operation mode stored in an operation mode storage area 110-3.

Further, the firmware update processor 100A executes processing for updating firmware currently stored in the firmware storage area 110-1 with the acquired firmware. Hereinafter, processing performed in connection with updating firmware is referred to as firmware update processing. Further, hereinafter, a firmware update is also referred to as a firmware update.

The display controller 100B controls display of a user interface screen related to firmware update processing on the displayer 120. Further, for example, when a terminal device is connected from the outside, the display controller 100B may control display of a user interface screen by providing a WEB screen to the connected terminal device.

FIG. 4 is a block diagram of the memory 110 of the image forming apparatus 10 according to the present disclosure. For example, in the memory 110, storage areas for a firmware storage area 110-1, an operation mode storage area 110-3, and a user consent storage area 110-5 are secured.

The firmware storage area 110-1 is an area for storing firmware of the image forming apparatus 10. The firmware is preferably stored in an area that cannot be rewritten unless a predetermined condition is satisfied. For example, the firmware is preferably stored in a rewritable ROM (EEPROM, flash ROM).

The operation mode storage area 110-3 is an area for storing data related to an operation mode of firmware update processing. Here, in the present embodiment, the operation mode of the firmware update processing includes a "disabled mode", an "automatic mode", and an "administrator confirmation mode". A detailed description of each operation mode will be given below.

The user consent storage area 110-5 is an area for storing information indicating that the user has consented to terms of use. For example, the user consent storage area 110-5 stores, as information that consent was given by a user, user identification information and time information indicating a time at which consent was given. When the terms of use for the automatic mode and the administrator confirmation mode are different, user identification information and time information indicating a time at which consent was given are stored for each of the automatic mode and the administrator confirmation mode, as information that consent was given by a user.

Here, user consent refers to a user confirming and consenting to (including acceptance or the like) the terms of use. The controller 100 acquires information indicating that a user has consented in response to a predetermined operation performed by the user.

### 4. General Firmware Update Processing Operation Mode Setting Method

Prior to describing the operation of the image forming apparatus 10 according to the present disclosure, an example of a screen displayed on the displayer 120 when the image forming apparatus 10 executes a general firmware update processing operation mode setting method will be described.

There are two states, an "enabled mode" and a "disabled mode", as operation modes related to the firmware update processing of the image forming apparatus 10 according to the present disclosure. Further, the "enabled mode" may include an "automatic mode" and an "administrator confirmation mode". Hereinafter, the "disabled mode," the "automatic mode", and the "administrator confirmation mode" will be described.

When the operation mode is a "disabled mode," the firmware update processing does not function. When the operation mode is a "disabled mode," even if the communicator 140 receives a notification from the server 20 indicating that distribution of the latest firmware has started, the controller 100 does not execute firmware update processing.

When the operation mode is an "automatic mode", upon the communicator 140 receiving a notification from the server 20 indicating that distribution of the latest firmware has started, the controller 100 starts downloading the firmware from the server 20. Then, when the download of the firmware is completed, the controller 100 updates the currently executing firmware with the received firmware.

Note that when the operation mode is an "automatic mode", if restarting of the image forming apparatus 10 is necessary for application of the firmware, the controller 100 may control the restarting of the image forming apparatus 10. For example, the controller 100 may automatically restart the image forming apparatus 10 as necessary. Further, when the operation mode is the "automatic mode", the controller 100 may update the firmware with the received firmware when the image forming apparatus 10 is restarted next time. Further, regarding restarting, the controller 100 may cause the user to select whether or not to restart.

When the operation mode is an "administrator confirmation mode", upon the communicator 140 receiving a notification from the server 20 indicating that distribution of the latest firmware has started, the controller 100 starts downloading the firmware from the server 20. Then, when the download of the firmware is completed, the controller 100 may notify the administrator or the like by displaying on the displayer 120 a notification indicating that preparations for updating the firmware are ready. Then, when an update execution instruction and confirmation are performed by the administrator or the like, the controller 100 updates the currently executing firmware with the received firmware. Further, the controller 100 may control restarting of the image forming apparatus 10 in the same manner as in the "automatic mode".

Further, when the operation mode is an "administrator confirmation mode", the controller 100 may provide a notification when the communicator 140 receives a notification from the server 20 indicating that distribution of the latest firmware has started. Then, the controller 100 may receive the firmware after confirmation by an administrator.

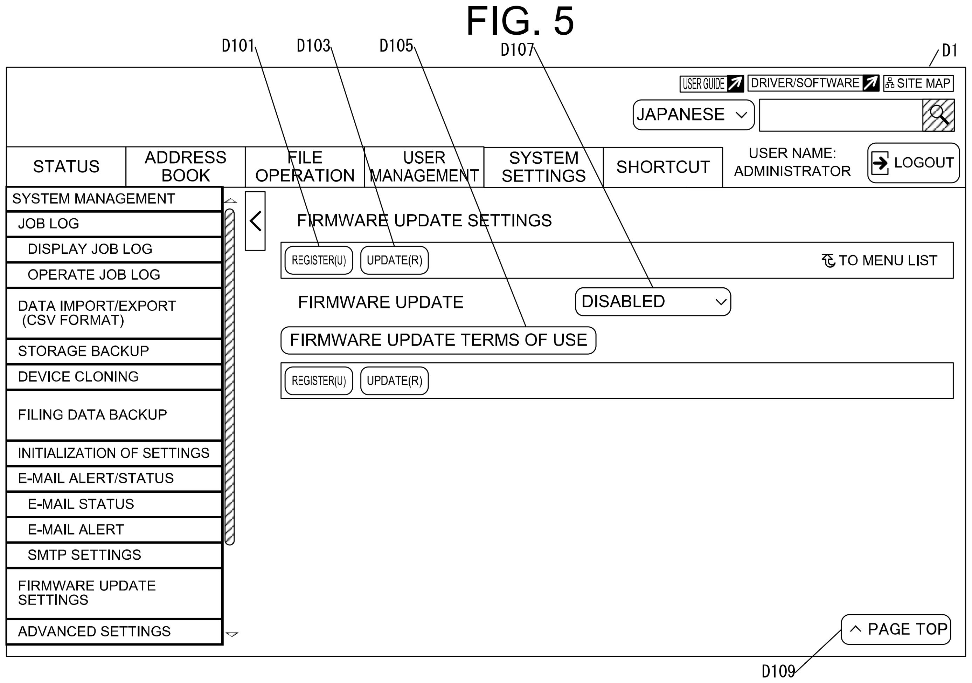

A screen D1 in FIG. 5 is an example of a screen displayed on the displayer 120 when the image forming apparatus 10 sets an operation mode for a general firmware update processing. The screen D1 is an example of a screen displayed when the operation mode is set to disabled (disabled mode).

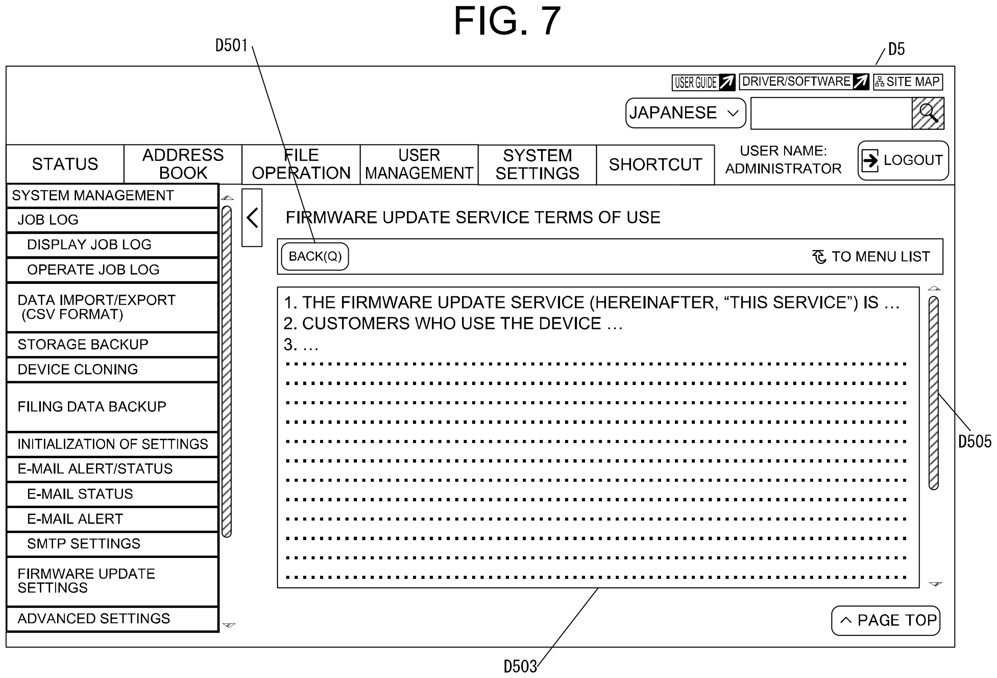

For example, the screen D1 may display a registration button D101, an update button D103, a terms of use display button D105, and an operation mode change button D107. The registration button D101 is a button for a user such as an administrator of the image forming apparatus 10 to register values entered as the firmware update settings on the screen D1 in the image forming apparatus 10. The update button D103 is a reload button, and is, for example, a button for updating the display state of the screen D1 to the latest state. The terms of use display button D105 is a button for displaying the terms of use of the firmware, and is a button for displaying a screen D5 in FIG. 7 described below.

The operation mode change button D107 can display the current operation mode of the image forming apparatus 10. Further, the operation mode change button D107 may allow the user to change the operation mode.

The operation mode change button D107 may be displayed, for example, as a pull-down menu, and a menu (not illustrated) including other operation modes such as an "automatic mode" and an "administrator confirmation mode" may be displayed in response to an operation on the operation mode change button D107.

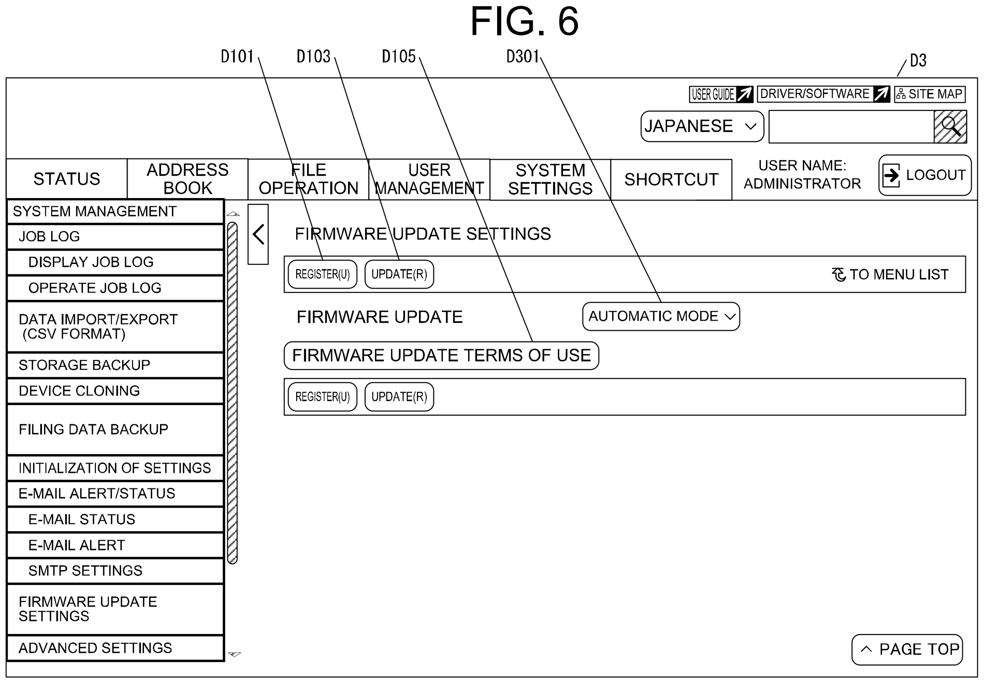

A screen D3 in FIG. 6 is an example of another screen displayed on the displayer 120 when the image forming apparatus 10 sets an operation mode for a general firmware update processing. The screen D3 is an example of a screen displayed when the operation mode is set to the automatic mode. The screen D3 is similar to the screen D1 in that it has the registration button D101, the update button D103, and the terms of use display button D105, but is different in that the operation mode change button D107 is an operation mode change button D301. The operation mode change button D301 is a state after the operation mode change button D107 is operated and "automatic mode" is selected in the pull-down menu, and is substantially the same button.

A screen D5 in FIG. 7 is an example of a screen displayed on the displayer 120 of the image forming apparatus 10 in the general firmware update processing operation mode setting or the operation mode setting according to the present disclosure. When the terms of use display button D105 is operated on the screen D1, the screen D5 is displayed. Alternatively, the screen D5 may be displayed when the terms of use display button D105 is operated on the screen D3.

The screen D5 has a back button D501, a terms of use display field D503, and a scroll bar D505. The back button D501 is a button for returning back from the screen D5 to the screen displayed immediately before the screen D5. For example, when a transition from the screen D1 to the screen D5 occurs due to an operation on the terms of use display button D105 on the screen D1, the screen D1 is displayed in response to an operation on the back button D501. Similarly, when a transition to the screen D5 occurs in response to an operation on the terms of use display button D105 on the screen D3, the screen D3 may be displayed in response to an operation on the back button D501. The terms of use display field D503 is a field for displaying a document related to firmware (here, a text of terms of use of a firmware update service). The scroll bar D505 is for scrolling the terms of use display field D503 up and down. If the text of the terms of use does not fit in the terms of use display field D503, the entire text can be read by operating the scroll bar D505 up and down. Note that the screen D5 does not include a display element (for example, a checkbox or button indicating consent) for the user to input information indicating consent to the terms of use.

In the general firmware update processing operation mode setting, the terms of use display button D105 is displayed both on the screen D1 where the operation mode is disabled and on the screen D3 where the operation mode is the automatic mode. When the operation mode is disabled, since the firmware update service is not used, a user of the image forming apparatus 10 does not need to confirm the terms of use. On the screen D1 where the operation mode is disabled, the terms of use display button D105 is provided even though there is no need to display the terms of use display button D105. For this reason, the screen D1 presents unnecessary options to a user.

Further, when the operation mode is the automatic mode, since the firmware update service is used, an administrator or the like of the image forming apparatus 10 is required to confirm the content of the terms of use. However, some users do not operate the terms of use display button D105 and therefore do not display the terms of use display field D503. For this reason, there is a case where the firmware update service is used without the content of the terms of use being confirmed.

Furthermore, in the general firmware update processing operation mode setting, as described above, no display element for a user to input information indicating that the user has consented to the terms of use was arranged in the screen where the text of the terms of use is displayed.

### 5. Processing Flow

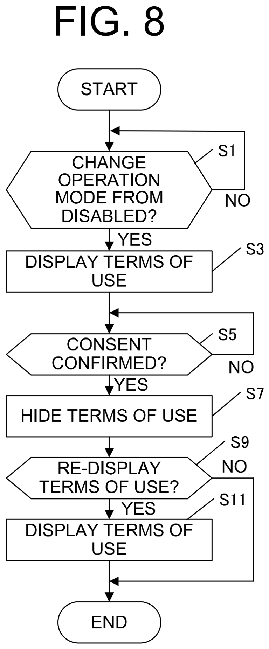

FIG. 8 is a flowchart for explaining an operation of firmware-update setting processing of the image forming apparatus 10 according to the present disclosure. The following processing is preferably executed as appropriate by any of the configurations described in FIG. 3, but for convenience of explanation, it will be described as being executed by the controller 100.

It is assumed that initially, the operation mode of the firmware update function is stored as the disabled mode in the operation mode storage area 110-3. That is, in the image forming apparatus 10, the firmware update function is "disabled".

The controller 100 determines whether or not an operation to change the operation mode from the disabled mode has been received from the user via the operation acceptor 130 (S1). When an operation to change the operation mode is not received from the user, the controller 100 waits until an operation to change the operation mode is received from the user (S1, NO). That is, in S1, the controller 100 determines whether or not the firmware update function of the image forming apparatus 10 has been changed from disabled to enabled.

Next, when an operation to change the operation mode from the disabled mode is received from the user (S1, YES), the controller 100 displays the terms of use on the displayer 120 (S3). The controller 100 may display the terms of use in a scrollable state, or may display them on a different screen (for example, a pop-up screen).

Further, the controller 100 may display, together with the terms of use, a display element for inputting indicating consent to the terms of use on the displayer 120. Hereinafter, a display element for indicating consent to the terms of use is referred to as a consent display element. The consent display element is a display element for responding (i.e., consenting) to the terms of use (i.e., a document). Various modes of the consent display element are conceivable, such as a checkbox, a radio button, and a text input field.

Next, the controller 100 determines whether or not there has been consent from the user (S5). For example, the controller 100 may determine that there has been consent by receiving, via the operation acceptor 130, an operation indicating consent to the terms of use from the user. When an operation indicating consent to the terms of use is not received (S5, NO), the controller 100 may wait until a consent operation is received. Further, the controller 100 may terminate the firmware update processing when there is no consent operation for a predetermined time, when a cancel operation is performed by the user, or the like.

When the user consents to the terms of use (S5, YES), the controller 100 stores information indicating that consent was given by the user in the user consent storage area 110-5. Here, the controller 100 stores, for example, information indicating that consent was given, and may also store, for example, the time when consent was given. Further, when the terms of use are different depending on the operation mode, the controller 100 may further store information regarding the operation mode for which consent was given. Further, the controller 100 may store information regarding the user who consented.

Then, because the user has consented, the controller 100 terminates the display of the terms of use (S7). When an operation to re-display the terms of use is received from the user via the operation acceptor 130 (S9, YES), the controller 100 can display the terms of use again (S11).

Here, since consent has already been given by the user once for the terms of use, it is preferable that the controller 100 does not display the consent display element in S11, unlike the display of the terms of use in S3. For example, when displaying the terms of use, the controller 100 may refer to the information stored in the user consent storage area 110-5 and determine whether or not to display the consent display element, based on whether or not information indicating that consent was given by the user is stored.

Here, in FIG. 8, a case in which the controller 100 does not display the consent display element is described, taking the second display of the terms of use (re-display of the terms of use) as an example. In addition, the consent display element may not be displayed in the following cases as well.

### (1) When information stored in the user consent storage area 110-5 already exists

For example, when information based on the environment in which the terms of use are currently displayed is already stored in the user consent storage area 110-5, the controller 100 may omit the display of the consent display element (it may be hidden). For example, when the terms of use have the same content as those previously displayed, when an operation mode is the same as that used when the terms of use were previously displayed, and when a user is the same as a user when the terms of use were previously displayed, the consent display element does not need to be displayed.

### (2) When within a predetermined time from a time of previous consent

For example, the controller 100 may omit the display of the consent display element when an elapsed time from a time at which consent was previously given, the time being stored in the user consent storage area 110-5, is within a predetermined time. For example, when an elapsed time from a time of previous consent is within 10 seconds or within 30 seconds, since it is highly likely that the consent is given to the same terms of use, the controller 100 does not need to display the consent display element.

Then, if an operation to re-display the terms of use has not been received from the user (S9, NO), the controller 100 terminates the processing. For example, the controller 100 terminates the update processing when an operation to transition to another menu is performed without the user selecting to re-display the terms of use.

### 6. Operation Examples

### 6.1 Operation Example 1

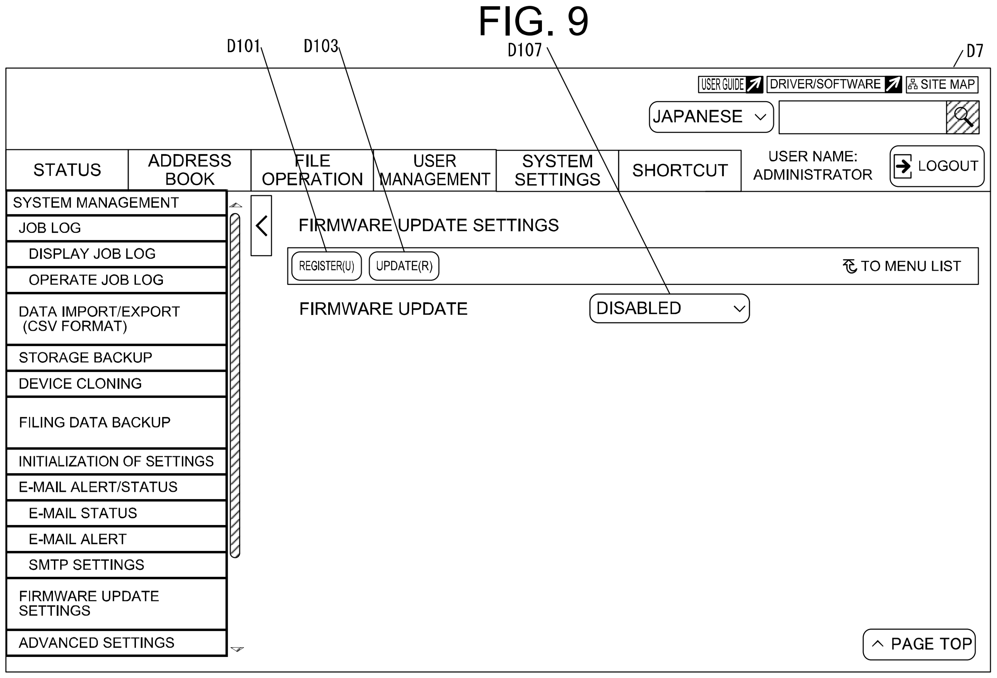

Screens D7 to D13 in FIGS. 9 to 12 are examples of firmware update setting screens displayed on the displayer 120 of the image forming apparatus according to the present disclosure in Operation Example 1. In Operation Example 1, initially, the firmware update function is set to disabled. Further, the terms of use are the same both when the firmware update function is in the automatic mode and when it is in the administrator confirmation mode.

The screen D7 is an example of a screen displayed in S1. Since initially the operation mode of the firmware update function is set to disabled, the display of the operation mode change button D107 is "disabled".

As displayed on the operation mode change button D107, since the firmware update function is currently disabled and there is no need to display the terms of use to the user, the terms of use display button D105 and a terms of use display field D901 described below are not provided on the screen D7. Further, since there is no need to request the user to agree to the terms of use, no consent display element is provided on the screen D7.

The screen D9 is an example of a screen displayed in S3. After the operation mode change button D107 is operated via the operation acceptor 130 on the screen D7 and the operation mode is changed from disabled to the automatic mode, the controller 100 causes the display of the displayer 120 to transition from the screen D7 to the screen D9. Whereas it was the operation mode change button D107 on the screen D7, it is the operation mode change button D301 on the screen D9, and the display of the operation mode is the automatic mode.

Further, the screen D9 has a terms of use display field D901, a scroll bar D903, and a consent checkbox (CB) D905.

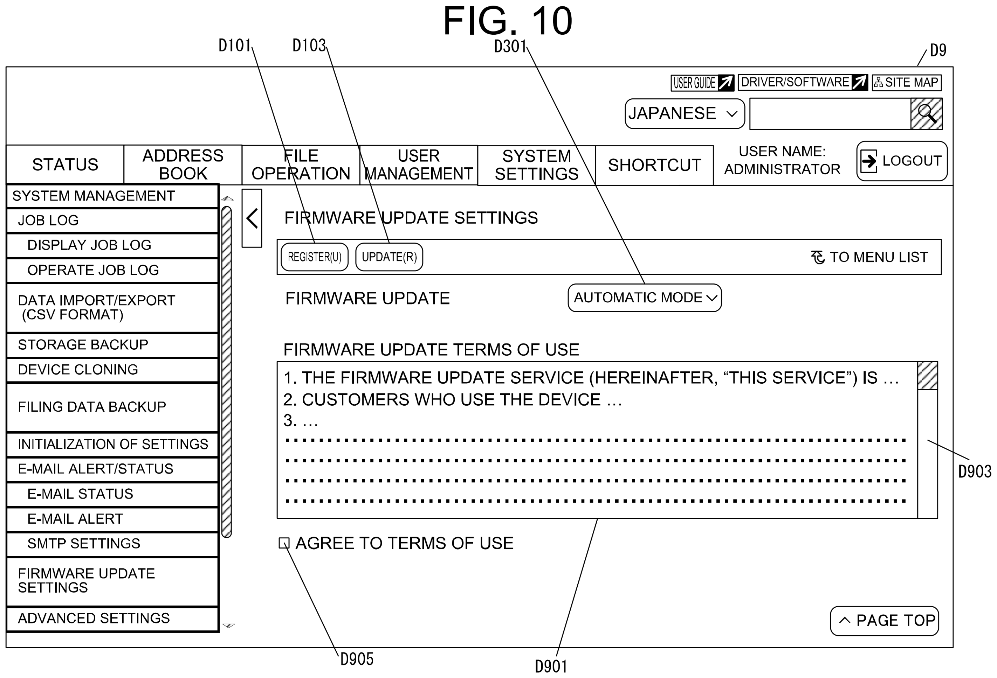

The terms of use display field D901 is a field for displaying the text of the terms of use. The text displayed in the terms of use display field D901 in FIG. 10 schematically illustrates the concept, and the content of the text of the terms of use is arbitrary.

The scroll bar D903 is a display element for scrolling the display of the terms of use display field D901 up and down when the entire text cannot be displayed within the area of the terms of use display field D901. When the scroll bar D903 is operated up and down via the operation acceptor 130, the controller 100 scrolls the text displayed in the terms of use display field D901 up and down in response to the up and down operation.

The consent CB D905 is a type of consent display element. When the user agrees to the terms of use, the user may check the consent CB D905 via the operation acceptor 130 and operate the registration button D101, thereby registering input contents indicating that the user has consented to the terms of use in the image forming apparatus 10.

The controller 100 may control whether the consent CB D905 is in a state where a check input can be received (active state) or in a state where a check input cannot be received (inactive state). The controller 100 may notify the user of the state of the consent CB D905 by displaying the consent CB D905 grayed out when the consent CB D905 is in an inactive state and performing normal display when it is in an active state.

The consent CB D905 may be displayed in an inactive state and an operation on the consent CB D905 may not be accepted before an entire text of the terms of use is displayed in the terms of use display field D901 by an operation on the scroll bar D903, while the consent CB D905 may be in an active state and an operation on the consent CB D905 may be accepted after the entire text has been displayed. This makes it possible to prompt the user to check the entire text.

Alternatively, regardless of whether or not an entire text was displayed in the terms of use display field D901, the consent CB D905 may be displayed in an active state and an operation on the consent CB D905 may be accepted.

When the registration button D101 is operated in a state where the consent CB D905 is not checked (a state where an input indicating consent to the terms of use is not made in the consent display element), the controller 100 may display a message prompting the user to check the consent CB D905. The message is, for example, "Please check [Agree to terms of use] after confirming the firmware update service terms of use".

The screen D11 is an example of a screen displayed in S7. When the consent CB D905 is checked and the registration button D101 is operated on the screen D9 via the operation acceptor 130, the controller 100 causes the display of the displayer 120 to transition from the screen D9 to D11. On the screen D11, the terms of use display button D105 is displayed instead of the terms of use display field D901, while the scroll bar D903 and the consent CB D905 are hidden.

Since the user has already consented to the terms of use in S5, there is no need to display the terms of use in S7; however, the terms of use display button D105 is provided on the screen D11 so that the user can confirm the terms of use again. Similarly, since the user has already consented to the terms of use in S5, the consent CB D905 is hidden on the screen D11.

The screen D13 is an example of a screen displayed when the user operates the operation mode change button D301 on the screen D11 to change the operation mode from the automatic mode to the administrator confirmation mode. In response to the operation on the operation mode change button D301, the controller 100 has changed the operation mode change button D301 to an operation mode change button D1301.

In Operation Example 1, the terms of use are the same for the automatic mode and the administrator confirmation mode. Further, the screen D13 is displayed after consent to the terms of use in S5. For this reason, on the screen D13, similarly to the screen D11, the terms of use display field D901 is hidden, and the terms of use display button D105 is displayed instead. In response to an operation on the terms of use display button D105, the screen transitions to the screen D5, allowing the user to re-confirm the terms of use as necessary. Further, similarly to the screen D11, since consent to the terms of use has already been confirmed, the consent CB D905 is hidden on the screen D13.

As described above, according to Operation Example 1, when the operation mode is disabled, the terms of use display field D901 and the consent CB D905 are hidden, while the terms of use display field D901 and the consent CB D905 are displayed in response to the operation mode being changed from disabled to the automatic mode. Thus, the display of the terms of use can be controlled based on the operation mode.

Further, according to Operation Example 1, after the consent CB D905 is checked and the consent to the terms of use is registered, the terms of use display button D105 is displayed instead of the terms of use display field D901, and the consent CB D905 is hidden. Thus, the display of the terms of use and the consent display element can be controlled base on a presence or absence of consent to the terms of use.

### 6.2 Operation Example 2

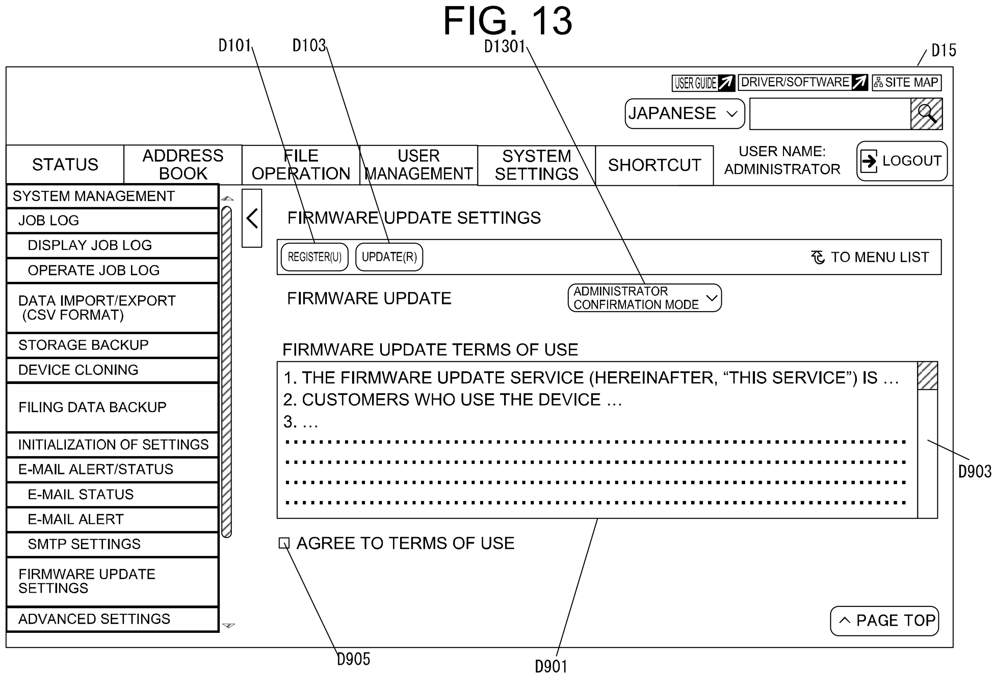

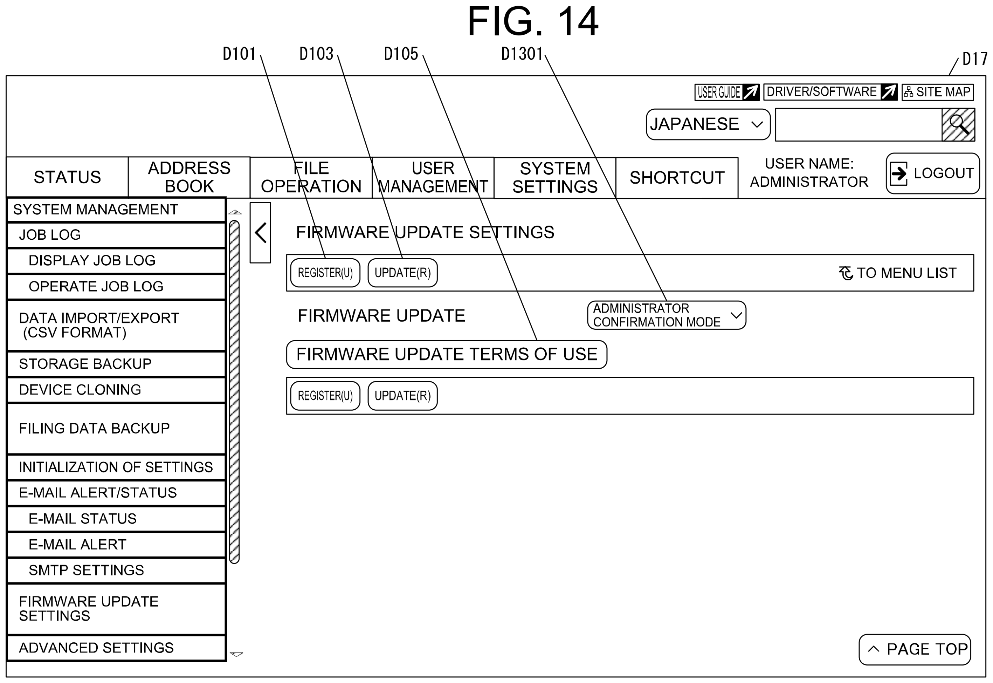

In Operation Example 2, the terms of use are different both when the firmware update function is in the automatic mode and when it is in the administrator confirmation mode. Screens D15 and D17 in FIGS. 13 and 14 are examples of screens displayed on the displayer 120 of the image forming apparatus 10 according to the present disclosure in Operation Example 2.

The screen D15 is a screen corresponding to the screen D13 in Operation Example 1, and is an example of a screen displayed when the user operates the operation mode change button D301 on the screen D11 to change the operation mode from the automatic mode to the administrator confirmation mode. In Operation Example 1, since the terms of use for the automatic mode and the administrator confirmation mode were the same text, even if the operation mode was changed from the automatic mode to the administrator confirmation mode by operating the operation-mode change button D301 on screen D11, there was no need to obtain consent to the terms of use again. In contrast, in Operation Example 2, since the terms of use for the automatic mode and the administrator confirmation mode are different, it is necessary to obtain consent from the user again. Therefore, unlike the screen D13, the screen D15 has a terms of use display field D901, a scroll bar D903, and a consent CB D905.

In order to make it easier for the user to recognize the difference between the terms of use for the automatic mode and the administrator confirmation mode, the terms of use display field D901 preferably displays the terms of use for the administrator confirmation mode such that portions different from the terms of use for the automatic mode stand out. For example, the controller 100 may display the text of the terms of use in a scrolled state so that a portion different from the terms of use for the automatic mode is displayed at a top line of the terms of use display field D901. Further, for example, the controller 100 may alert the user by displaying a character string different from the terms of use for the automatic mode in a different color (for example, red) from other character strings, may perform marker display (coloring the background of the character string) for the different character strings, may underline the different character strings, or may apply a combination of these methods to make the character string stand out.

The screen D17 is an example of a screen displayed when the registration button D101 is operated after the consent CB D905 is checked on the screen D15. Since user consent has been registered, similarly to the screen D13, the terms of use display button D105 is displayed on the screen D17 instead of the terms of use display field D901. Further, the consent CB D905 is hidden on the screen D17.

According to Operation Example 2, the effects similar to those of Operation Example 1 can be obtained. Further, according to Operation Example 2, when the terms of use for the automatic mode and the administrator confirmation mode are different, even after consent to the terms of use for the automatic mode has been registered, it is possible to request the user to agree to the terms of use for the administrator confirmation mode again. Note that in Operation Example 2, a case of changing from the automatic mode to the administrator confirmation mode has been described, but the same applies to a case of changing from the administrator confirmation mode to the automatic mode.

### 6.3 Operation Example 3

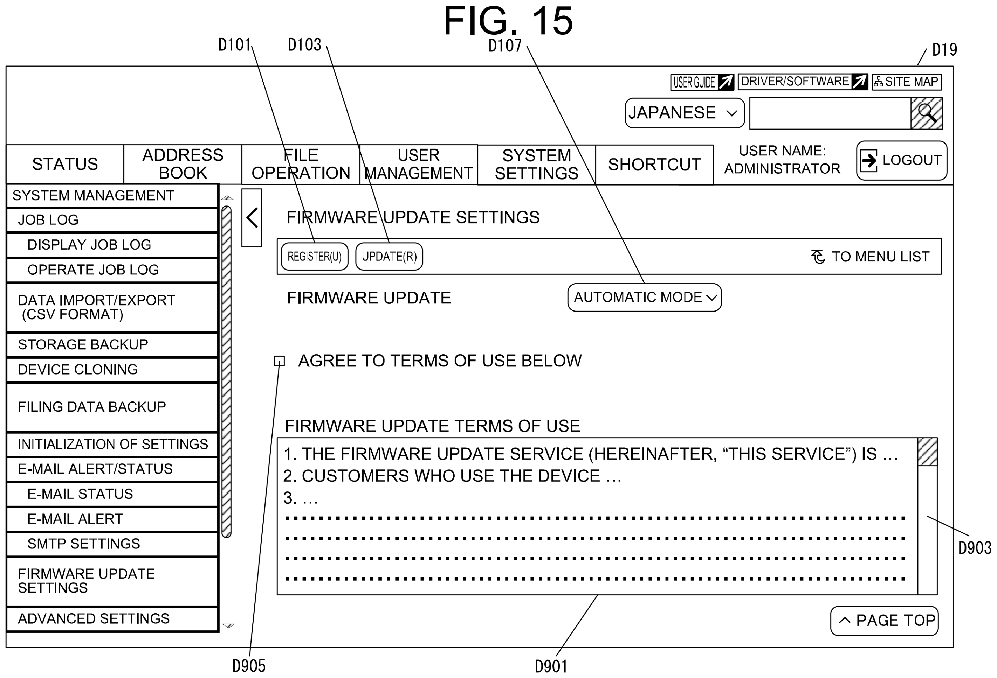

In Operation Example 3, the screen displayed in S3 is different from that in Operation Example 1. In Operation Example 1, the screen D9 was displayed in S3, but in Operation Example 3, a screen D19 in FIG. 15 is displayed. In the screen D9 and the screen D19, the arrangement of the terms of use display field D901, the scroll bar D903, and the consent CB D905 differs.

On the screen D9, the consent CB D905 was arranged below the terms of use display field D901 and the scroll bar D903. For this reason, there is a risk that the user may have difficulty noticing the presence of the consent CB D905. In contrast, on the screen D19, the consent CB D905 is arranged above the terms of use display field D901 and the scroll bar D903. Therefore, in the screen D19, there is an advantage in that the user can easily notice the consent CB D905.

Note that in order to make it easier for the user to notice the consent CB D905, in addition to arranging the consent CB D905 near a center of the screen as on the screen D19, methods such as increasing a font size of text "Agree to terms of use below" accompanying the consent CB D905, changing a character color, underlining, or blinking may be applied, or a combination of these methods may be applied.

### 6.4 Operation Example 4

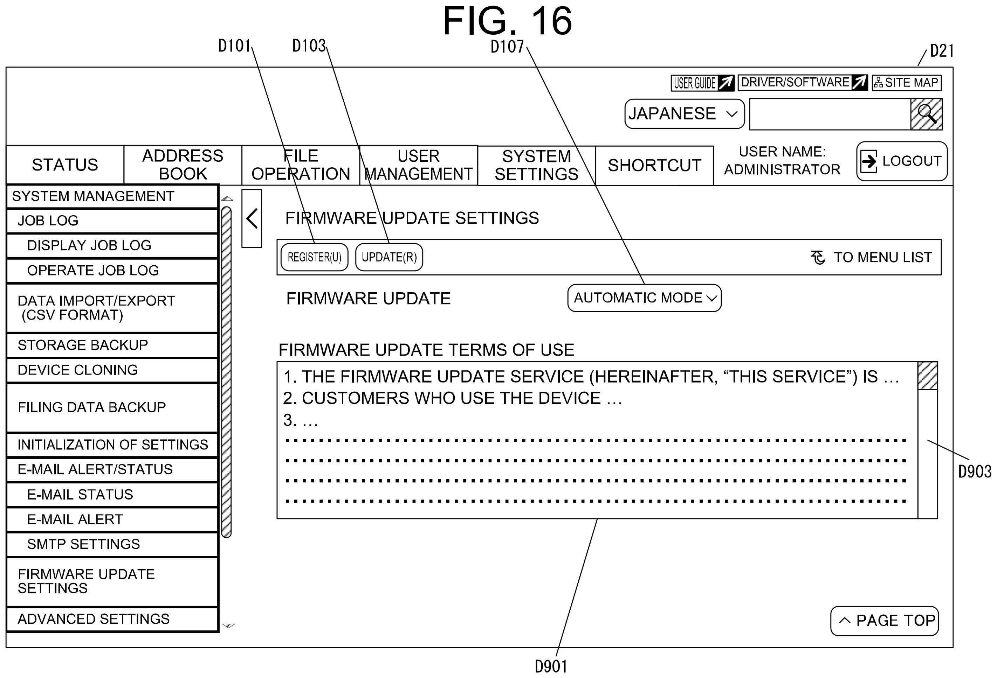

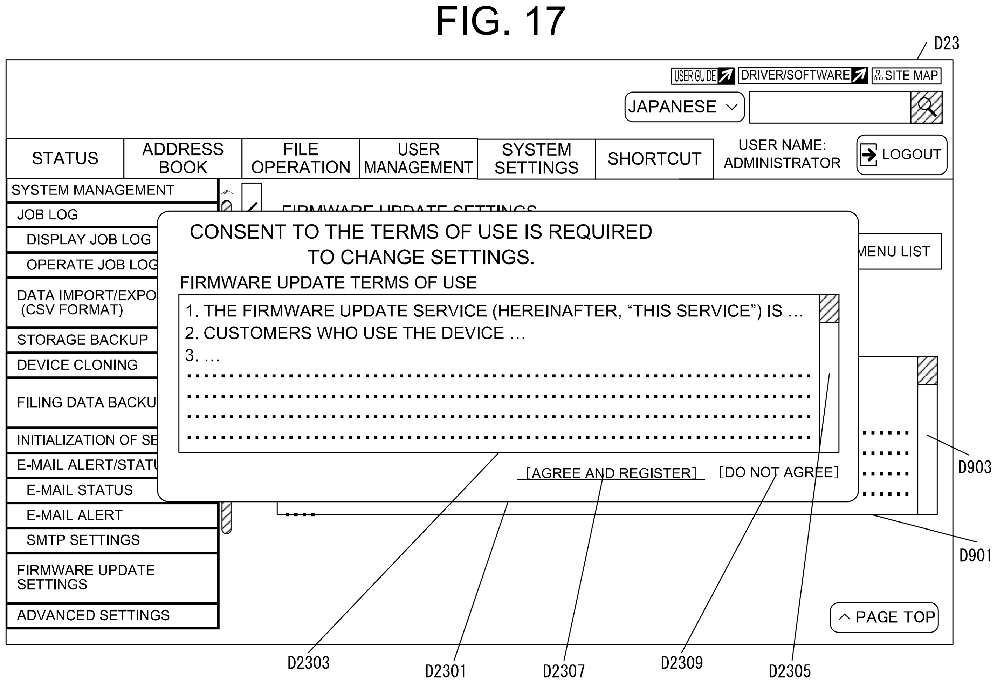

In Operation Example 4, the screen displayed in S3 is different from that in Operation Example 1. In Operation Example 1, the screen D9 was displayed in S3, but in Operation Example 4, a screen D21 in FIG. 16 is displayed, and a screen D23 in FIG. 17 is displayed in response to an operation on the registration button D101. The screen D9 and the screen D21 are different in terms of the presence or absence of the consent CB D905. Further, in the screen D9 and the screen D21, operations in response to an operation on the registration button D101 differ.

In Operation Example 1, on the screen D9, when the registration button D101 was operated in a state where the consent CB D905 was checked, the input content for user consent was registered in the image forming apparatus 10. In contrast, in Operation Example 4, when the registration button D101 is operated on the screen D21, the controller 100 causes the display of the displayer 120 to transition from the screen D21 to the screen D23 in response to this operation.

The screen D23 is a screen in which a dialog D2301 is overlaid on screen D21. The dialog D2301 has a terms of use display field D2303, a scroll bar D2305, a consent button D2307, and a non-consent button D2309.

The terms of use display field D2303 is a field for displaying the text of the terms of use. The scroll bar D2305 is a scroll bar for scrolling the text displayed in the terms of use display field D2303 up and down.

The consent button D2307 is an example of a consent display element, and is a button for accepting an input indicating that the user has consented to the terms of use displayed in the terms of use display field D2303. When the consent button D2307 is operated via the operation acceptor 130, the controller 100 stores, in the user consent storage area 110-5, information indicating that the user has agreed to the terms of use, proceeds to S7, and displays the screen D11 on the displayer 120.

The non-consent button D2309 is a button for accepting an input indicating that the user does not consent to the terms of use displayed in the terms of use display field D2303. When the non-consent button D2309 is operated via the operation acceptor 130, the controller 100 causes the display of the displayer 120 to transition from the screen D23 to the screen D21. In this case, the controller 100 does not store user consent in the user consent storage area 110-5.

According to Operation Example 4, the terms of use are displayed in the terms of use display field D901 of the screen D21, and further, the consent button D2307 is displayed while the terms of use are displayed again in the terms of use display field D2303 within the dialog D2301 overlaid on the screen D23. By displaying the terms of use in a dialog in this way, it is possible to obtain consent from the user by the consent button D2307 in the same dialog while requiring the user to more strongly recognize the terms of use. Note that in the above example, the terms of use display fields D901 and D2303 were provided on both screens D21 and D23, but it may be provided on only one of them.

### 6.5 Operation Example 5

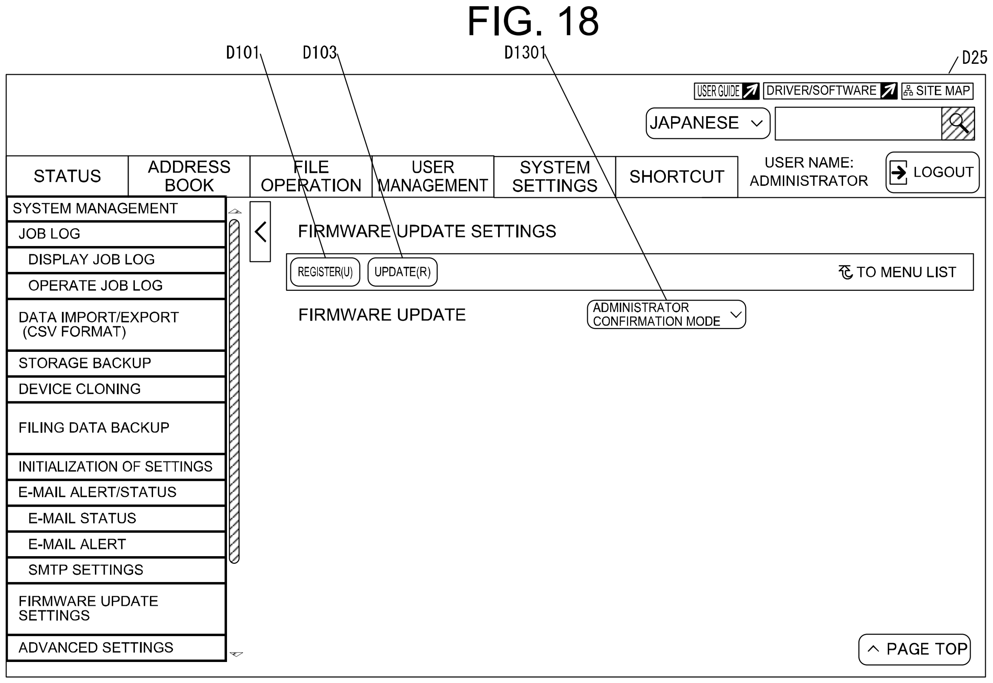

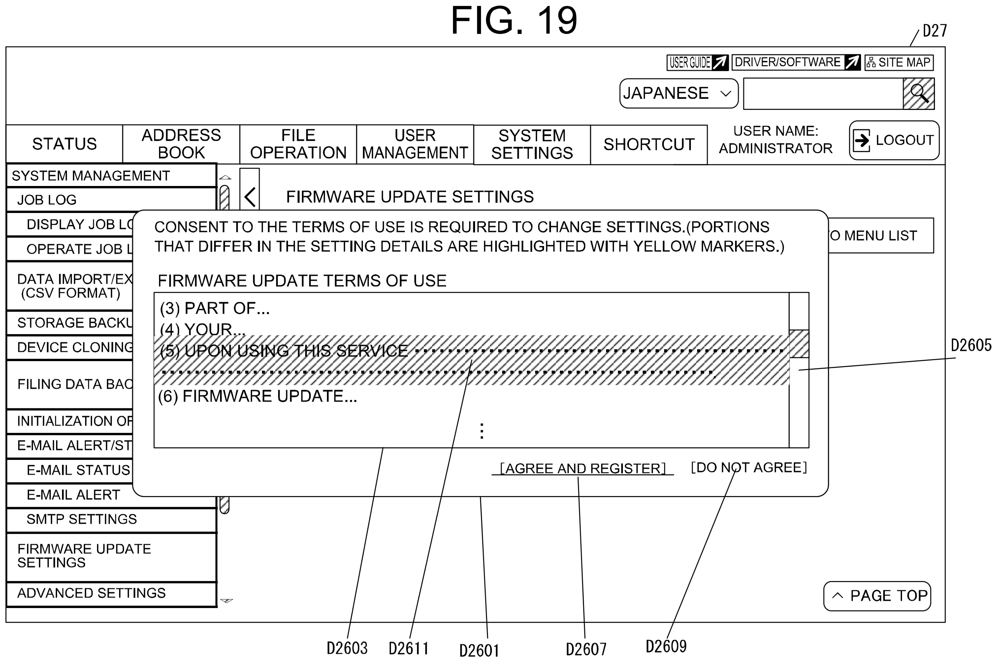

In Operation Example 5, similarly to Operation Example 2, the terms of use differ between a case where the firmware update function is in the automatic mode and a case where the firmware update function is in the administrator confirmation mode. Screens D25 and D27 in FIGS. 18 and 19 are examples of screens displayed on the displayer 120 of the image forming apparatus 10 according to the present disclosure in Operation Example 5.

Similarly to Operation Example 2, in Operation Example 5, since the terms of use for the automatic mode and the administrator confirmation mode are different, it is necessary to request the user to agree to the terms of use again, but on the screen D25, instead of providing the terms of use display field D901, the scroll bar D903, and the consent CB D905, the operation in response to an operation on the registration button D101 is changed.

When the registration button D101 is operated via the operation acceptor 130, the controller 100 causes the display of the displayer 120 to transition from the screen D25 to the screen D27.

The screen D27 is a screen in which a dialog D2601 is overlaid on the screen D25. The dialog D2601 has a terms of use display field D2603, a scroll bar D2605, a consent button D2607, a non-consent button D2609, and a highlighted display D2611. The terms of use display field D2603, the scroll bar D2605, the consent button D2607, and the non-consent button D2609 are similar to the terms of use display field D2303, the scroll bar D2305, the consent button D2307, and the non-consent button D2309 of Operation Example 4, respectively.

The highlighted display D2611 is a portion in which the difference between the terms of use for the automatic mode and the administrator confirmation mode is highlighted, and the portion shaded in the figure indicates that it is colored with a yellow marker. In the highlighted display D2611, a yellow marker is used as a method of highlighting the display, but other methods may be used. Other conceivable methods include, for example, changing the font size, changing the font type, underlining, blinking, changing the font color, and the like. Further, these methods may be applied in combination.

According to Operation Example 5, the effects similar to those of Operation Example 2 can be obtained. Further, according to Operation Example 5, the highlighted display D2611 makes it easier for the user to recognize the difference in the terms of use. Note that in Operation Example 5, a case of changing from the automatic mode to the administrator confirmation mode has been described, but the same applies to a case of changing from the administrator confirmation mode to the automatic mode.

### 6.6 Operation Example 6

In Operation Examples 1 to 5 described above, examples of operations in which the operation mode is changed from disabled to enabled (automatic mode or administrator confirmation mode) have been described. In Operation Example 6, an example of an operation when the operation mode is changed from the enabled mode to the disabled mode will be described.

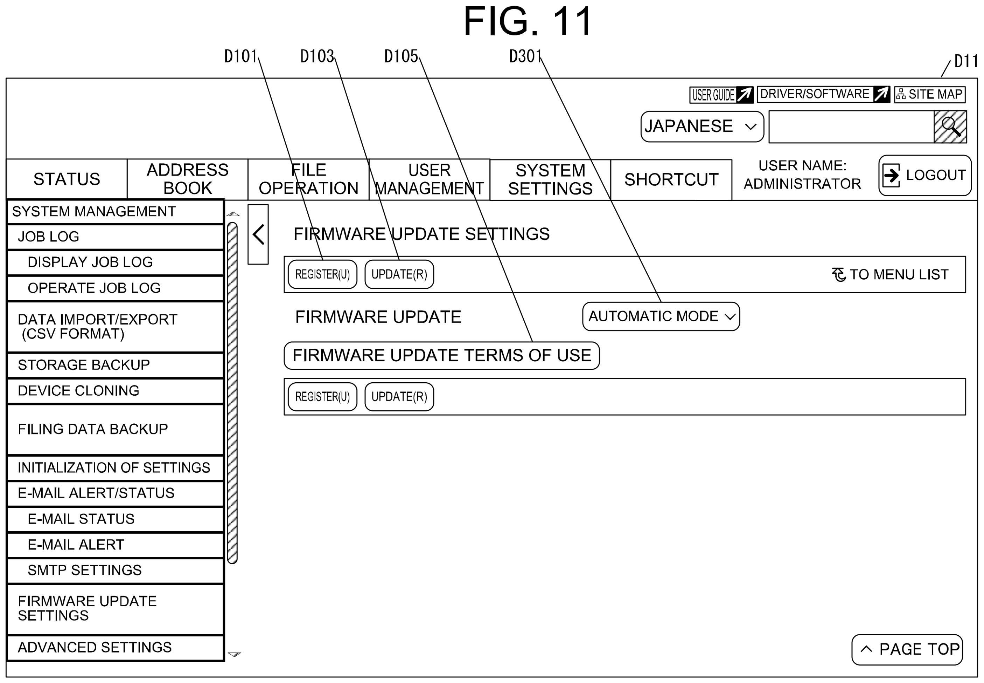

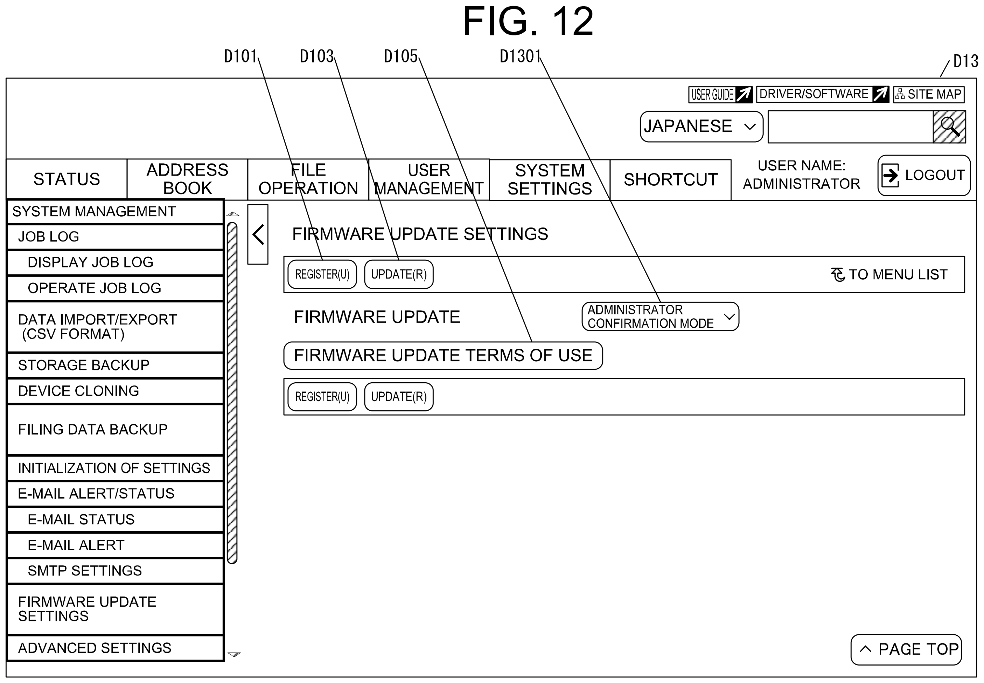

Initially, the firmware update function is in the automatic mode or the administrator confirmation mode. In the case of the automatic mode, for example, the screen D11 of FIG. 11 is displayed. In the case of the administrator confirmation mode, for example, the screen D13 of FIG. 12 is displayed. Note that both the screens D11 and D13 have the terms of use display button D105.

Here, it is assumed that the operation mode change button D301 on the screen D11 or the operation mode change button D1301 on the screen D13 is operated to change the operation mode to the disabled mode. At this time, the controller 100 causes the screen displayed on the displayer 120 to transition from the screen D11 or the screen D13 to the screen D7 of FIG. 9. As illustrated in FIG. 9, there is no terms of use display button D105 on the screen D7.

According to Operation Example 6, when the operation mode is changed from the automatic mode or the administrator confirmation mode to the disabled mode (i.e., the update function is changed from enabled to disabled), the terms of use display button D105, which was displayed on the screens D11 and D13 before the change, is hidden on the screen D7 after the change.

Note that in Operation Example 6, at least a part of the text of the terms of use may be displayed on the screens D11 and D13 instead of the terms of use display button D105. Further, in Operation Example 6, a consent display element such as the consent checkbox (CB) D905 may be displayed together with the terms of use display button D105 or at least a part of the text of the terms of use on the screens D11 and D13. In this case, on the screen D7 after the operation mode is changed from enabled to disabled, not only the terms of use display button D105 but also the text of the terms of use and the consent display element may be hidden.

### 7. Modifications

The present disclosure is not limited to each of the above-described embodiments and modifications, and various changes are possible. That is, embodiments obtained by appropriately combining technical means changed within a range not departing from the spirit of the present disclosure are also included in the technical scope of the present disclosure. Although the configuration for which a patent is sought in the present disclosure is described in the appended claims, it is not intended to be excluded from the technical scope because it is not described in the claims.

In the above-described embodiments, the display of the terms of use of the firmware related to the firmware update of the image forming apparatus 10 has been described as an example, but the method of the present disclosure can be similarly applied to the display of documents related to computer programs of other processing apparatuses. For example, the method of the present disclosure can be applied to the display of documents (for example, terms of use, license, etc.) related to updates of an OS, a driver program, or an application program of a desktop computer or a laptop computer. Further, the method of the present disclosure may be applied to the display of documents (for example, terms of use, license, etc.) presented in these computer programs/software.

Further, in the above-described specification, configurations described using expressions such as "in the case of" and "when" are explained merely as examples, and are not intended to limit the present disclosure to the described contents. Configurations other than those cases or times are also disclosed to the extent that they would be apparent to a person skilled in the art, and the present disclosure is intended to acquire rights thereto.

Further, in the above-described specification, descriptions of processing and data flow accompanied by a sequence are not limited to the described sequence. For example, configurations in which a part of processing is omitted or the sequence is changed are also disclosed, and the present disclosure is intended to acquire rights thereto.

Further, although some parts of the above-described embodiments are described separately for convenience of explanation, the embodiments may of course be implemented in combination within a technically feasible range.

The computer program operating in each apparatus in the embodiment is a program (a program that causes a computer to function) that controls a CPU or the like so as to realize the functions of the above-described embodiment. Then, information handled in these apparatuses is temporarily accumulated in a temporary storage device (for example, a RAM) during processing, and thereafter stored in storage devices such as various Read Only Memories (ROMs), HDDs, and Solid State Drives (SSDs), and read, modified, or written by the CPU as necessary.

Here, as a recording medium for storing a computer program, any of a semiconductor medium (for example, a ROM, a non-volatile memory card, etc.), an optical recording medium/magneto-optical recording medium (for example, Digital Versatile Discs (DVDs), Magneto Optical Discs (MOs), Mini Discs (MDs), Compact Discs (CDs), Blu-ray (registered trademark) Discs (BDs), etc.), a magnetic recording medium (for example, magnetic tapes, flexible disks, etc.), and the like may be used. Further, by executing the loaded computer program, not only are the functions of the above-described embodiments realized, but the functions of the present disclosure may also be realized by processing in cooperation with an operating system or other application programs based on the instructions of the computer program.

Further, in the case of distribution to the market, the computer program can be stored in a portable recording medium and distributed, or transferred to a server computer connected via a network such as the Internet. In this case, it goes without saying that the storage device of the server computer is naturally also included in the present disclosure.

### REFERENCE SIGNS LIST

1 system
10 image forming apparatus
20 server
100 controller
100A firmware update processor
100B display controller
110 memory
110-1 firmware storage area
110-3 operation mode storage area
110-5 user consent storage area
110A ROM
110B RAM
110C storage
120 displayer
130 operation acceptor
140 communicator
150 connector
160 image inputter
170 image generator

## Claims

1. A processing apparatus (10) comprising:
a memory (110); and one or more controllers (100), wherein
the one or more controllers:
provide an update function (100A) for updating a computer program stored in the memory; and
control display of a document related to the computer program, based on whether the update function is enabled (100B).

2. The processing apparatus (10) according to claim 1,
wherein the one or more controllers control whether or not to display a display element for responding to the document, based on whether the update function is enabled.

3. The processing apparatus (10) according to claim 1,
wherein the one or more controllers hide the document when the update function is changed from enabled to disabled.

4. The processing apparatus (10) according to claim 1,
wherein the one or more controllers display the document when the update function is changed from disabled to enabled.

5. The processing apparatus (10) according to claim 1,
wherein the update function has a plurality of operation modes.

6. The processing apparatus (10) according to claim 5,
wherein, when an operation mode of the update function is changed from one operation mode to another operation mode, the one or more controllers display a display element for responding to the document without displaying the document.

7. The processing apparatus (10) according to claim 5,
wherein the one or more controllers display different documents, based on the operation modes.

8. A method for controlling a processing apparatus (10) including a memory (110),
the method comprising an update function of updating a computer program stored in the memory, and controlling display of a document related to the computer program, based on whether the update function is enabled.

9. A non-transitory computer-readable medium causing a computer to implement:
an update function of updating a computer program stored in a memory (110); and
a function of controlling display of a document related to the computer program, based on whether the update function is enabled.
